Europäisches Patentamt

European Patent Office

Office européen des brevets

(19)

(11) EP 0 810 258 B1

(12) FASCICULE DE BREVET EUROPEEN

(45) Date de publication et mention
de la délivrance du brevet:
**10.10.2001 Bulletin 2001/41**

(51) Int Cl.7: **C08K 3/22**, B60C 1/00,
C08L 21/00

(21) Numéro de dépôt: **97107921.5**

(22) Date de dépôt: **15.05.1997**

(54) **Composition de caoutchouc diénique à base d'alumine en tant que charge renforçante et son
utilisation pour la fabrication d'enveloppes de pneumatiques**

Dienkautschukmischung, die Aluminiumoxid als verstärkender Füllstoff enthält und ihre Verwendung
in Reifenlaufflächen

Diene rubber composition containing alumina as reinforcing filler and use in tire treads

(84) Etats contractants désignés:
**BE DE ES FR GB IT**

(30) Priorité: **28.05.1996 FR 9606698**

(43) Date de publication de la demande:
**03.12.1997 Bulletin 1997/49**

(73) Titulaire: **COMPAGNIE GENERALE DES
ETABLISSEMENTS MICHELIN-MICHELIN & CIE
63040 Clermont-Ferrand Cédex (FR)**

(72) Inventeurs:
 • **Custodero, Emmanuel
  63400 Chamalieres (FR)**
 • **Tardivat, Jean-Claude
  63000 Clermont-Ferrand (FR)**

(74) Mandataire: **Ribière, Joel
 Michelin & Cie
 Service SGD/LG/PI-LAD
 63040 Clermont-Ferrand Cedex 09 (FR)**

(56) Documents cités:
 **EP-A- 0 272 071          EP-A- 0 697 432**

## Description

La présente invention a pour objet une composition de caoutchouc diénique comportant, de préférence à titre majoritaire, de l'alumine en tant que charge renforçante qui est utilisable pour la fabrication d'enveloppes de pneumatiques.

De façon à réduire la consommation de carburant et les nuisances émises par les véhicules à moteur, des efforts importants ont été réalisés par les concepteurs de pneumatiques afin d'obtenir des pneumatiques présentant à la fois une très faible résistance au roulement, une adhérence améliorée tant sur sol sec que sur sol humide ou enneigé et une très bonne résistance à l'usure.

De nombreuses solutions ont été proposées pour abaisser la résistance au roulement et améliorer l'adhérence des pneumatiques, mais celles-ci se traduisent en général par une déchéance très importante de la résistance à l'usure. En effet, il est bien connu de l'homme de l'art que l'incorporation de charges blanches conventionnelles comme la silice, l'alumine, la bentonite, l'argile, le kaolin, la craie, l'oxyde de titane, le talc dans des compositions de caoutchouc utilisées dans la fabrication de pneumatiques et notamment de bandes de roulement, se traduit certes par un abaissement de la résistance au roulement et par une amélioration de l'adhérence sur sol mouillé, enneigé ou verglacé, mais aussi par une déchéance inacceptable de la résistance à l'usure.

Une solution efficace à ce problème a été décrite dans la demande de brevet EP-A-0 501 227 qui divulgue une composition de caoutchouc diénique vulcanisable au soufre obtenue par travail thermomécanique d'un copolymère de diène conjugué et d'un composé vinyle aromatique préparé par polymérisation en solution avec 30 à 150 parties en poids pour 100 parties d'élastomère d'une silice précipitée particulière hautement dispersible.

D'autres compositions possédant un tel excellent compromis entre plusieurs propriétés contradictoires présenteraient un intérêt majeur pour les fabricants de pneumatiques qui disposeraient ainsi de différents modes d'action. En outre, l'amélioration de la résistance à l'usure ainsi obtenue pourrait éventuellement être convertie en abaissement de la résistance au roulement en diminuant l'épaisseur de la bande de roulement. Il serait ainsi envisageable de confectionner des pneumatiques présentant une durée de vie inchangée, mais plus légers et donc moins consommateurs d'énergie.

Il a été découvert de manière surprenante et inattendue que la mise en oeuvre d'une alumine particulière, connue en soi, peut permettre d'obtenir une composition de caoutchouc utilisable pour la fabrication de pneumatiques et présentant substantiellement les propriétés avantageuses des compositions à base de silice décrites dans la demande de brevet EP-A-0 501 227.

La présente invention a pour objet une composition de caoutchouc selon la revendication 1.

L'invention a d'autre part pour objet l'utilisation dans un pneumatique d'une composition selon l'invention.

L'invention a en outre pour objet des bandes de roulement et des pneumatiques possédant un excellent compromis de propriétés contradictoires, à savoir une faible résistance au roulement, une bonne résistance à l'usure et une adhérence améliorée tant sur sol sec que sur sol mouillé ou enneigé.

La composition conforme à l'invention est particulièrement adaptée à la confection de bandes de roulement de pneumatiques destinés à équiper des véhicules de tourisme, camionnette, deux roues et poids-lourds, avions, engins de génie civil, agraire, manutention.

Les bandes de roulement comportant la composition conforme à l'invention peuvent être utilisées lors de la fabrication de pneumatiques neufs ou pour le rechapage des pneumatiques usagés. Cette composition est également une solution intéressante pour les autres parties du pneumatique en particulier l'armature de sommet d'un pneu à carcasse radiale, les bourrelets, notamment en tant que gomme de bourrage tringle, ou les flancs du pneumatique en raison de ses bonnes propriétés hystérétiques.

La composition de caoutchouc conforme à l'invention confère à une bande de roulement non seulement les propriétés habituelles des charges blanches, c'est-à-dire une faible résistance au roulement et une adhérence améliorée sur sol sec, humide ou enneigé, mais également une résistance à l'usure plus élevée que celle des mélanges au noir de carbone et sensiblement égale à celle obtenue avec une silice renforçante hautement dispersible présentant une même proportion volumique de charge.

L'alumine utilisable comme charge renforçante dans la composition conforme à l'invention est toute alumine qui présente une surface BET allant de 30 à 400m$^2$.g$^{-1}$, et à titre préférentiel de 80 à 250 m$^2$.g$^{-1}$, un taux élevé de fonctions réactives de surface Al-OH comme par exemple dans les alumines de type $\gamma$, $\delta$ ou $\theta$, et préférentiellement de type $\gamma$, une taille moyenne de particules (le terme particule étant pris dans son sens générique) déterminée après désagglomération aux ultrasons, à l'aide d'un sonificateur VIBRACELL BIOBLOCK (600W) équipé d'une sonde de ½ pouce de diamètre, par sédimentation centrifuge inférieure ou égale à 500nm, préférentiellement inférieure à 200nm, et une dispersibilité élevée, c'est-à-dire suffisante pour que peu d'agrégats supérieurs à quelques microns soient observés par réflexion en microscopie optique sur une coupe de mélange caoutchouteux. L'alumine particulière sélectionnée est utilisée à raison de 20 à 300 parties en poids pour cent parties en poids d'élastomère et peut être utilisée seule ou en présence d'autres charges renforçantes comme par exemple le noir de carbone ou une silice renforçante ou toute autre charge. L'amélioration des propriétés est d'autant plus importante que la proportion de l'alumine particulière est élevée par rapport aux autres charges éventuellement présentes. A titre préférentiel, l'alumine est utilisée dans une proportion majoritaire par rapport aux autres charges; l'amélioration des performances étant optimale lorsque l'alumine particulière constitue la totalité de la charge. A titre d'alumine particulière utilisable dans la composition conforme à l'invention convient par exemple l'alumine CR 125 commercialisée par la société Baikowski. La mesure de surface BET est effectuée selon la méthode de BRUNAUER-EMMET-TELLER décrite dans « The Journal of the American Society » Vol. 60, page 309, février 1938 et correspondant à la norme NFT 45007 (novembre 1987). Lorsque la taille des particules d'alumine est supérieure à 500nm, l'activité renforçante de l'alumine est très fortement dégradée.

L'agent de couplage peut être tout agent de couplage connu dans le domaine du renforcement par la silice, et préférentiellement le bis(triéthoxysilylpropyl)tétrasulfure ou Si69 commercialisé par la Société Degussa. La quantité d'agent de liaison par rapport à la quantité d'alumine est comprise entre $10^{-7}$ à $10^{-5}$ moles/m$^2$ d'alumine, ces deux limites étant inclues et préférentiellement de l'ordre de $10^{-6}$moles/m$^2$ d'alumine.

A titre d'élastomères diéniques susceptibles d'être mis en oeuvre dans la composition conforme à l'invention on entend le caoutchouc naturel, tout homopolymère obtenu par polymérisation d'un monomère diène conjugué ayant de 4 à 12 atomes de carbone, tout copolymère binaire obtenu par copolymérisation d'un ou plusieurs diènes conjugués entre eux ou avec un ou plusieurs composés vinyle aromatique ayant de 8 à 20 atomes de carbone ou avec un ou plusieurs monomères non aromatiques tel(s) que la vinylpyridine, l'acrylonitrile, le méthacrylonitrile, le méthylmethacrylonitrile, l'isobutylène, tout copolymère tertiaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1.4. l'éthylidène norbornène, le dicylclopentadiène. A titre de diènes conjugués conviennent notamment le butadiène-1,3, le 2-méthyl-1,3-butadiène, les 2,3-di(alcoyle en $C_1$ à $C_5$)-1,3-butadiène tels que par exemple le 2,3-diméthyl-1,3-butadiène, 2.3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, le 2,4-hexadiène.

A titre de composés vinyle aromatique conviennent notamment le styrène, l'ortho-, méta-, paraméthylstyrène, le mélange commercial « vinyle-toluène », le paratertiobutyl-styrène, les méthoxystyrènes. les chloro-styrènes, le vinyle mésitylène, le divinyle benzène, le vinyle naphtalène.

Les copolymères peuvent contenir entre 99 % et 20 % en poids d'unités diéniques et de 1 % à 80 % en poids d'unités vinyle aromatiques ou de monomère(s) non aromatique(s). Les polymères peuvent avoir toute microstructure qui est fonction des conditions de polymérisation utilisées, notamment de la présence ou non d'un agent modifiant et/ou randomisant et des quantités d'agent modifiant et/ou randomisant employées. Les polymères peuvent être à blocs, statistiques, séquencés, microséquencés. et être préparés en émulsion ou en solution. Ils peuvent bien sûr être entièrement ou partiellement fonctionnalisés ou être couplés ou étoilés.

A titre préférentiel conviennent les polybutadiènes et en particulier ceux ayant une teneur en unités-1,2 comprise entre 4 % et 80 % et ceux ayant une teneur en unités cis-1,4 supérieure à 90 %, les polyisoprènes, et en particulier le 3,4-polyisoprène, les copolymères de butadiène-styrène et en particulier ceux préparés en solution ayant une teneur en styrène comprise entre 5 et 50 % en poids et plus particulièrement entre 20 % et 40 % en poids, une teneur en unités -1,2 de la partie butadiénique comprise entre 4 % et 65 % et plus particulièrement entre 55 % et 65 %, une teneur en unités trans1,4 comprise entre 15 % et 80 % et plus particulièrement entre 20 % et 25 % et ayant une température de transition vitreuse comprise entre -20°C et -30°C. Dans le cas de copolymères de butadiènestyrène-isoprène conviennent ceux ayant une teneur en styrène comprise entre 5 et 50 % en poids et plus particulièrement comprise entre 10 % et 40 %, une teneur en isoprène comprise entre 15 % et 60 % en poids et plus particulièrement comprise entre 20 % et 50 % en poids, une teneur en butadiène comprise entre 5 et 50 % et plus particulièrement comprise entre 20 % et 40 % en poids, une teneur en unités-1,2 de la partie butadiénique comprise entre 4 % et 85 %, une teneur en unités trans-1,4 de la partie butadiénique comprise entre 6% et 80 %, une teneur en unités-1,2 plus 3,4 de la partie isoprénique compris entre 5 % et 70 % et une teneur en unités trans-1,4 de la partie isoprénique comprise entre 10 % et 50 % . A un degré préférentiel moindre, conviennent également les caoutchoucs butyle halogénés et en particulier chlorés ou bromés. Ces élastomères sont préparés selon les procédés décrits dans la littérature et connus de l'homme de l'art.

La composition conforme à l'invention contient également les autres constituants et additifs habituellement utilisés dans des mélanges de caoutchouc comme des plastifiants, pigments, antioxydants, du soufre, des accélérateurs de vulcanisation, des huiles d'extension paraffiniques, naphténiques ou aromatiques si l'on désire la présence d'une huile d'extension, un agent de renforcement tel qu'un silane.

La composition conforme à l'invention peut être utilisée seule ou en coupage avec toute autre composition de caoutchouc notamment celles utilisées pour la fabrication des pneumatiques.

L'invention est illustrée à titre non limitatif par les exemples suivants où les propriétés finales de la composition sont exprimées d'une part sous la forme de propriétés physiques (Exemples 1 et 3) et d'autre part sous la forme de propriétés de pneumatiques à carcasse radiale de dimension 175/70 R13 conventionnellement fabriqués et en tous points identiques hormis la composition de caoutchouc constitutive de la bande de roulement (Exemple 2). Les différentes propriétés sont évaluées comme suit :

les mesures sont effectuées comme indiqué ci-dessous et il est attribué la valeur de référence 100 aux valeurs mesurées pour la composition témoin (1) (sauf pour la résistance à l'usure) tandis que les valeurs mesurées pour la composition témoin (2) et la composition conforme à l'invention sont établies par rapport à la valeur de référence.

- Adhérence sur sol enneigé : détermination du comportement et de la performance de pneus sur différents états de neige rencontrés en circulation routière hivernale.

- Adhérence sur sol humide : détermination de la durée mise par un véhicule de tourisme pour parcourir une trajet arrosé comportant différentes compositions de revêtement routiers présentant des lignes droites et des courbes.

- Résistance au roulement : mesurée sur volant selon la norme SAE J 12 69 de juin 1980. Une valeur supérieure à celle du témoin arbitrairement fixée à 100 indique une diminution de la résistance au roulement.

- Durée de vie sur usure : déterminée par le kilométrage parcouru jusqu'à ce que l'usure atteigne les témoins d'usure disposés dans les rainures. Une valeur supérieure à la référence 94 exprime une amélioration de la résistance à l'usure.

- Modules d'allongement à 300 % et 100 % : mesures effectuées selon la norme ISO 37. Une valeur supérieure à la référence 100 exprime une amélioration.

- Allongement à la rupture Scott ) Une valeur inférieure à la
  mesuré à 100 °C ) référence 100 exprime une
  Force rupture mesurée en MPa )diminution.

- Perte hystérétique : mesurée par rebond à 60°C $\Rightarrow$ une valeur inférieure à la référence indique une amélioration.

- Propriétés dynamiques :
  Mesures en fonction de la déformation : effectuées à 10 Hertz avec une déformation crêtecrête allant de 0,15 % à 50 %. La non linéarité exprimée est la différence de module de cisaillement entre 0,15 % et 50 % de déformation en MPa. L'hystérèse est exprimée par la mesure de tan($\delta$) à 7 % de déformation. Une valeur inférieure à la référence 100 indique une amélioration.

## Exemple 1

Dans cet exemple une composition chargée à l'alumine est comparée avec deux compositions témoins : le témoin ①est une composition classique à base de noir de carbone, le témoin ②est une composition à base de silice. Dans ces compositions, toutes les parties sont exprimées en poids pour cent parties d'élastomère :

TABLEAU I

| | Composition selon l'invention | Témoin ① | Témoin ② |
|---|---|---|---|
| SBR(xx) | 100 | 100 | 100 |
| Alumine Baikowski CR125 (x) | 90 | - | - |
| Noir de carbone N234 | - | 45 | - |
| Silice Z1165* | - | - | 50 |
| Agent de couplage Si69 | 4 | - | 4 |
| Acide stéarique | 2.5 | 2.5 | 2.5 |
| Oxyde de Zinc | 2.5 | 2.5 | 2.5 |
| Antioxydant (a) | 1.9 | 1.9 | 1.9 |
| Paraffine (b) | 1.5 | 1.5 | 1.5 |
| Soufre | 1 | 1 | 1 |
| Sulfénamide (c) | 2 | 2 | 2 |
| Diphénylguanidine | 1.5 | 1.5 | 1.5 |

(xx) SBR solution ayant une teneur en styrène de 26 %, une teneur en liaisons-1,2 de 26 % une teneur en liaisons trans-1,4 de 50 %.

(x) alumine CR 125 commercialisée par la Société Bailowski Chimie - France

BET = 105 m²/g - densité = 3.67 g/cm3 - phase cristalline γ > 96 %.

(*) silice hautement dispersible commercialisée par la société Rhône-Poulenc.

(a) : antioxydant : N-(1,3-diméthyl-butyl)-N'-phényl-p-phénylènediamine.

(b) : paraffine : mélange de cires macro et microcristallines.

(c) : sulfénamide : N-cyclohexyl-2-benzothiazyl sulfénamide.

Chaque composition est réalisée par un travail thermo-mécanique des élastomères diéniques dans un mélangeur interne en deux étapes qui durent respectivement 5 et 4 minutes, pour une vitesse moyenne des palettes de 45 tours/par minute jusqu'à atteindre une température maximale de tombée identique de 160°C et suivies d'une étape de finition effectuée à 30°C sur un mélangeur externe. La vulcanisation des compositions est adaptée aux cinétiques de vulcanisation de chaque mélange.
Les propriétés physiques des mélanges sont consignées dans le tableau II :

TABLEAU II

| Propriétés à l'état vulcanisé | Composition selon l'invention | Témoin ① | Témoin ② |
|---|---|---|---|
| Module 100% | 120 | 100 | 100 |

## EP 0 810 258 B1

TABLEAU II   (suite)

| Propriétés à l'état vulcanisé | Composition selon l'invention | Témoin ① | Témoin ② |
|---|---|---|---|
| Module 300% | 103 | 100 | 87 |
| Force rupture Scott | 99 | 100 | 96 |
| Allongement rupture Scott | 99 | 100 | 99 |
| Perte hystérétique | 80 | 100 | 85 |
| ΔG à 23°C | 75 | 100 | 89 |
| tan (δ) à 23°C | 74 | 100 | 80 |

On constate que la résistance mécanique de la composition conforme à l'invention est substantiellement proche de celle des compositions témoins, ce qui est favorable en matière de résistance à l'usure d'un pneumatique muni d'une bande de roulement constituée par une telle composition tandis qu'elle exhibe des propriétés hystérétiques améliorées par rapport à celles des compositions témoins, ce qui est favorable pour diminuer la résistance au roulement d'un pneumatique muni d'une bande de roulement constituée par une telle composition et pour constituer une sous couche de bande de roulement ou une gomme de bourrage tringle d'un bourrelet de pneumatique ou encore une gomme de flanc ou d'accrochage sur la jante.

## Exemple 2

Dans cet exemple un pneumatique muni d'une bande de roulement constituée d'une composition conforme à l'invention est comparé à deux pneumatiques munis d'une bande de roulement différente conforme à l'art antérieur. La bande de roulement du témoin ① est élaborée avec une composition à base de noir de carbone, celle du témoin ② est à base d'une silice. Comme dans l'exemple précédent, toutes les parties de la composition sont exprimées en masse pour cent parties d'élastomère.

TABLEAU III.

|  | Composition selon l'invention | Témoin ① | Témoin ② |
|---|---|---|---|
| SBR/PB (xx) | 100 | 100 | 100 |
| Alumine Baikowski CR125 | 90 | - | - |
| Noir de carbone N234 | - | 45 | - |
| Silice Z1165 | - | - | 50 |
| Agent de couplage Si69 | 4 | - | 4 |
| Acide stéarique | 1 | 1 | 1 |
| Oxyde de zinc | 2.5 | 2.5 | 2.5 |
| Antioxydant | 2 | 2 | 2 |
| Paraffine | 1.5 | 1.5 | 1.5 |
| Soufre | 1.35 | 1.4 | 1.35 |
| Sulfénamide | 1.7 | 1.4 | 1.7 |
| Diphénylguanidine | 1.5 | - | 1.5 |

(xx) SBR solution ayant une teneur en styrène de 26 %, une teneur en liaisons trans-1,4 de 22 %, en liaisons-1,2 de 60 % et une Tg de -25 °C et soumis à un étoilage avec du diéthylène glycol, selon le procédé décrit dans le brevet français FR-B-2 295 972.

PB: polybutadiène ayant 93 % de liaisons cis-1,4.

Les autres constituants sont identiques à ceux utilisés dans l'exemple 1.

Les compositions sont mises en oeuvre comme dans l'exemple 1 avant d'être utilisées pour la fabrication des pneumatiques.

Les résultats sont consignés dans le tableau IV.

TABLEAU IV

| Propriétés | Pneumatique selon l'invention | Témoin ① | Témoin ② |
|---|---|---|---|
| Adhérence sur sol humide | 102 | 100 | 103 |
| Adhérence sur sol enneigé | 105 | 100 | 104 |
| Résistance au roulement | 120 | 100 | 115 |
| Durée de vie sur usure | 105 | 94 | 102 |

On constate que le pneumatique ayant une bande de roulement conforme à l'invention possède un niveau de compromis entre des propriétés très contradictoires sensiblement égal voire légèrement supérieur à celui obtenu avec le pneumatique témoin comprenant la silice hautement dispersible à titre de charge renforçante.

Exemple 3

Dans cet exemple deux compositions chargées avec des alumines conformes à l'invention A125 et D65CR (Baïkowski) sont comparées aux compositions témoin suivantes :

- alumine non conforme à l'invention CR30 (Baïkowski (témoin ③)
- noir de carbone N234 de référence (témoin ④)

TABLEAU V

| | Compositions selon l'invention | | Témoin ③ | Témoin ④ |
|---|---|---|---|---|
| SBR (xx) | 100 | 100 | 100 | 100 |
| Alumine A125 | 100 | - | - | - |
| Alumine D65CR | - | 100 | - | - |
| Alumine CR30 | - | - | 108 | - |
| Noir de carbone N234 | - | - | - | 50 |
| Agent de couplage Si69 | 3.5 | 2.2. | 2.0. | - |
| Acide stéarique | 2.5 | 2.5 | 2.5 | 2.5 |
| Oxyde de zinc | 2.5 | 2.5 | 2.5 | 2.5 |
| Antioxydant (a) | 1.9 | 1.9 | 1.9 | 1.9 |
| Soufre | 1 | 1 | 1 | 1 |
| Sulfénamide ( c) | 2 | 2 | 2 | 2 |
| Diphénylguanidine | 2 | 1.21 | 1 | - |

(xx), (a) et (c) : constituants identiques à ceux utilisés dans l'exemple 1.

Alumine A125 commercialisée par la société Baïkowski (Annecy) France, BET = 106m2/g, densité 3.7g/cm3, phase cristalline principale γ.

Alumine D65 CR commercialisée par la société Baïkowski : BET = 63 $m^2$/g, densité 3.7 g/cm3, phase cristalline principale δ avec présence de γ et θ.

Alumine CR30 commercialisée par la société Baïkowski (Annecy) BET = 26 $m^2$/g, densité 3.98/cm3. phase cristalline principale α.

Les compositions sont mises en oeuvre comme dans l'exemple 1. La cuisson des compostions est adaptée aux cinétiques de vulcanisation de chaque mélange. Les propriétés physiques des mélanges sont consignées dans le tableau VI.

TABLEAU VI

| Propriétés à l'état vulcanisé | Compositions selon l'invention | | Témoin ③ | Témoin ④ |
|---|---|---|---|---|
| | A 125 | D65CR | CR30 | N234 |
| Module 100 % | 187 | 80 | 94 | 100 |
| Module 300 % | 147 | 76 | 62 | 100 |
| Force rupture Scott | 107 | 99 | 39 | 100 |

On constate que la résistance mécanique exprimée par la force rupture des compositions conformes à l'invention est sensiblement identique ou supérieure à la composition témoin à base de noir de carbone alors que la composition témoin ③non conforme à l'invention présente des propriétés rupture en net recul, ce qui est très défavorable en matière de résistance à l'usure d'un pneumatique.

Exemple 4

Dans cet exemple, une alumine est préparée au laboratoire selon le procédé suivant :

- dissolution de 94.5 g de $Al_2(SO_4)_3$. 16 $H_2O$ (commercialisé par la société Fluka, pureté > 98 %) dans 350 g d'eau déminéralisée dans un réacteur d'un litre thermostaté à 35°C et agité à 400 tours.min$^{-1}$.

- mise en suspension de 72 g de $(NH_4)_2CO_3$ dans 150 g d'eau déminéralisée et ajout dans le réacteur à un débit

de 480 cm$^3$.min$^{-1}$. La réaction est instantanée et produit un précipité blanc ; l'agitation est maintenue pendant 45 min.

- le précipité est ensuite filtré et lavé à l'eau déminéralisée avant d'être séché dans des conditions douces.

- l'alumine (≈ 15g) est obtenue par calcination du précipité (3h à 800°C sous air).

L'alumine obtenue a une densité de 2.9 g.cm$^{-3}$. une surface spécifique BET de 240 m$^2$.g$^{-1}$ et une taille moyenne d'objet après désagglomération de 120 nm.

Cette alumine est comparée aux compositions témoin suivantes :

⑤ Noir de carbone N234 de référence
⑥ Silice Rhône-Poulenc Z1165

TABLEAU VII

|  | Composition selon l'invention | Témoin ⑤ | Témoin ⑥ |
|---|---|---|---|
| SBR(xx) | 100 | 100 | 100 |
| Alumine selon préparation | 80.8 | - | - |
| Noir de carbone N234 | - | 50 | - |
| Silice Z1165* | - | - | 58.3 |
| Agent de couplage Si69 | 9.7 | - | 4.7 |
| Acide stéarique | 2 | 2 | 2 |
| Oxyde de zinc | 2.5 | 2.5 | 2.5 |
| Antioxydant (a) | 1.9 | 1.9 | 1.9 |
| Soufre | 1.5 | 1.5 | 1.5 |
| Sulfénamide (c) | 2.5 | 2.5 | 2.5 |
| Diphénylguanidine | - | 1.2 | 2.4 |

(xx). (a) et (c) constituants identiques à ceux utilisés dans l'exemple 1.

Les compostions sont mises en oeuvre comme dans l'exemple 1. La cuisson des compositions est adaptée aux cinétiques de vulcanisation de chaque mélange. Les propriétés physiques des mélanges sont consignées dans le tableau VIII.

TABLEAU VIII

|  | Composition selon l'invention | Témoin ⑤ | Témoin ⑥ |
|---|---|---|---|
| Module 100 % | 135 | 100 | 102 |
| Force rupture Scott | 97 | 100 | 102 |

On constate que les propriétés mécaniques de la composition conforme à l'invention sont sensiblement identiques ou supérieures à celles des compositions témoins à base de noir de carbone ou de silice.

**Revendications**

1. Composition de caoutchouc utilisable dans les bandes de roulement des pneumatiques, à base d'au moins un élastomère diénique, comportant une charge blanche hautement dispersible à titre de charge renforçante et un agent de couplage (élastomère diénique/charge blanche), **caractérisée en ce que**:

   a) la charge blanche renforçante est constituée, en tout ou partie, de 20 à 300 pce (parties en poids pour cent d'élastomère) d'une alumine ayant les caractéristiques suivantes:

   - sa phase cristalline principale est du type y, à ou θ ;
   - sa surface BET (déterminée selon la méthode de Brunauer-Emmet-Teller) est comprise dans un domaine de 30 à 400 m$^2$/g ;
   - sa taille moyenne de particules, après désagglomération aux ultrasons (sonde de 600 W), mesurée par sédimentation centrifuge, est au plus égale à 500 nm;

   b) la quantité d'agent de couplage est comprise dans un domaine de 10$^{-7}$ à 10$^{-5}$ moles/m$^2$ d'alumine.

2. Composition selon la revendication 1, la phase cristalline principale de l'alumine étant du type γ.

3. Composition selon les revendications 1 ou 2, la surface BET de l'alumine étant comprise dans un domaine de 80 à 250 m$^2$/g.

4. Composition selon l'une quelconque des revendications 1 à 3, la taille moyenne des particules d'alumine étant au plus égale à 200 nm.

5. Composition selon l'une quelconque des revendications 1 à 4, la quantité d'agent de couplage étant égale à 10$^{-6}$ moles/m$^2$ d'alumine.

6. Composition selon l'une quelconque des revendications 1 à 6, dans laquelle l'alumine représente au moins 50% de la charge renforçante.

7. Composition selon la revendication 6, dans laquelle l'alumine représente la totalité de la charge renforçante.

8. Composition selon la revendication 6, comportant, outre l'alumine, de la silice hautement dispersible à titre de charge renforçante.

9. Composition selon l'une quelconque des revendications 1 à 8, **caractérisée en ce que** le ou les élastomère(s) diénique(s) est/sont choisi(s) parmi le caoutchouc naturel, les homopolymères de diènes conjugués, les copolymères de diènes conjugués entre eux ou avec un ou plusieurs composés vinyle aromatiques.

10. Composition selon la revendication 9, **caractérisée en ce que** l'élastomère diénique est un copolymère de butadiène-styrène ou un coupage d'un copolymère de butadiène-styrène et d'un polybutadiène ayant plus de 90 % de liaisons cis-1,4.

11. Composition selon la revendication 10, **caractérisée en ce que** le copolymère de butadiène-styrène est préparé en solution et a une teneur en styrène comprise entre 20% et 40% en poids, une teneur en liaisons vinyliques de la partie butadiénique comprise entre 55% et 65%, une teneur en liaisons trans-1,4 comprise entre 20% et 25% et une température de transition vitreuse comprise entre -20°C et -30°C.

12. Utilisation dans un pneumatique d'une composition selon l'une quelconque des revendications 1 à 11.

13. Utilisation selon la revendication 12, **caractérisée en ce que** la composition est utilisée dans une bande de roulement, une sous-couche de bande de roulement, une armature de sommet de pneumatique radial, un bourrelet de pneumatique, une gomme de bourrage tringle d'un bourrelet de pneumatique, une gomme de flanc ou une gomme d'accrochage sur jante.

14. Utilisation selon la revendication 13, **caractérisée en ce que** la composition est utilisée dans une bande de roulement.

**15.** Bande de roulement comportant une composition selon l'une quelconque des revendications 1 à 11.

**16.** Bande de roulement constituée en totalité d'une composition selon l'une quelconque des revendications 1 à 11.

**17.** Pneumatique comportant une composition selon l'une quelconque des revendications 1 à 11.

**18.** Pneumatique comportant une bande de roulement selon les revendications 15 ou 16.


**Patentansprüche**

**1.** Kautschukzusammensetzung, die in den Laufflächen von Luftreifen verwendbar ist, auf der Basis mindestens eines Dienelastomers, die einen hoch dispergierbaren weißen Füllstoff als verstärkenden Füllstoff und ein Kupplungsmittel (Dienelastomer/weißer Füllstoff) enthält, **dadurch gekennzeichnet, daß**

a) der weiße Füllstoff 20 bis 300 Gewichtsteile eines Aluminiumoxids enthält oder aus 20 bis 300 Gewichtsteilen dieses Aluminiumoxids besteht, bezogen auf 100 Gewichtsteile Elastomer, wobei das Aluminiumoxid die folgenden Eigenschaften aufweist:

- seine kristalline Hauptphase ist vom $\gamma$-, $\delta$- oder $\theta$-Typ,
- seine BET-Oberfläche (bestimmt nach der Brunauer-Emmet-Teller-Methode) liegt im Bereich von 30 bis 400 $m^2/g$,
- seine mittlere Partikelgröße nach Ultraschallzerkleinerung (600 W-Sonde), die durch Zentrifugalsedimentation gemessen wird, beträgt höchstens 500 nm,

b) die Menge des Kupplungsmittels im Bereich von $10^{-7}$ bis $10^{-5}$ mol pro $m^2$ Aluminiumoxid liegt.

**2.** Zusammensetzung nach Anspruch 1, wobei die kristalline Hauptphase des Aluminiumoxids vom $\gamma$-Typ ist.

**3.** Zusammensetzung nach Anspruch 1 oder 2, wobei die BET-Oberfläche des Aluminiumoxids im Bereich von 80 bis 250 $m^2/g$ liegt.

**4.** Zusammensetzung nach einem der Ansprüche 1 bis 3, wobei die mittlere Größe der Aluminiumoxidpartikel höchstens 200 nm beträgt.

**5.** Zusammensetzung nach einem der Ansprüche 1 bis 4, wobei die Menge des Kupplungsmittels $10^{-6}$ mol pro $m^2$ Aluminumoxid beträgt.

**6.** Zusammensetzung nach einem der Ansprüche 1 bis 5, wobei das Aluminiumoxid mindestens 50 % des verstärkenden Füllstoffs ausmacht.

**7.** Zusammensetzung nach Anspruch 6, wobei der verstärkenden Füllstoff ausschließlich aus dem Aluminiumoxid besteht.

**8.** Zusammensetzung nach Anspruch 6, die neben dem Aluminiumoxid eine hoch dispergierbare Kieselsäure als verstärkenden Füllstoff enthält.

**9.** Zusammensetzung nach einem der Ansprüche 1 bis 8, **dadurch gekennzeichnet, daß** das oder die Dienelastomere unter Naturkautschuk, den Homopolymeren konjugierter Diene, den Copolymeren konjugierter Diene untereinander oder mit einer oder mehreren vinylaromatischen Verbindungen ausgewählt ist.

**10.** Zusammensetzung nach Anspruch 9, **dadurch gekennzeichnet, daß** das Dienelastomer ein Butadien-Styrol-Copolymer oder ein Verschnitt aus einem Butadien-Styrol-Copolymer und einem Polybutadien mit mehr als 90 % 1,4-cis-Bindungen ist.

**11.** Zusammensetzung nach Anspruch 10, **dadurch gekennzeichnet, daß** das Butadien-Styrol-Copolymer in Lösung hergestellt ist und einen Styrolgehalt von 20 bis 40 Gew.-%, einen Gehalt an Vinylverbindungen im Butadienteil von 55 bis 65 %, einen Gehalt an trans-1,4-Bindungen von 20 bis 25 % und eine Glasübergangstemperatur von -20 bis -30 °C aufweist.

**12.** Verwendung einer Zusammensetzung nach einem der Ansprüche 1 bis 11 in einem Luftreifen.

**13.** Verwendung nach Anspruch 12, **dadurch gekennzeichnet, daß** die Zusammensetzung in einer Lauffläche, einer Laufflächen-Unterschicht, einer Scheitelbewehrung eines Radialreifens, einem Reifenwulst, einem Kernfüllungsgummi eines Reifenwulstes, einem Seitenwandgummi oder einem Wulstschutzgummi verwendert wird.

**14.** Verwendung nach Anspruch 13, **dadurch gekennzeichnet, daß** die Zusammensetzung in einer Lauffläche verwendet wird.

**15.** Lauffläche, die eine Zusammensetzung nach einem der Ansprüche 1 bis 11 enthält.

**16.** Lauffläche, die vollständig aus einer Zusammensetzung nach einem der Ansprüche 1 bis 11 besteht.

**17.** Luftreifen, der eine Zusammensetzung nach einem der Ansprüche 1 bis 11 enthält.

**18.** Luftreifen, der eine Lauffläche nach Anspruch 15 oder 16 aufweist.

**Claims**

**1.** A rubber composition which can be used in treads for tyres, based on at least one diene elastomer, comprising a highly dispersible white filler as reinforcing filler and a coupling agent (diene elastomer/white filler), **characterised in that**:

a) the reinforcing white filler is formed, in its entirety or in part, by 20 to 300 phr (parts by weight per hundred of elastomer) of an alumina having the following characteristics:

- its main crystalline phase is of the type $\gamma$, $\delta$ or $\theta$;
- its BET surface area (determined in accordance with the method of Brunauer, Emmet and Teller) lies within a range from 30 to 400 $m^2/g$;
- its average particle size, after ultrasound disagglomeration (600 W probe), measured by centrifugal sedimentation, is at most equal to 500 nm;

b) the quantity of coupling agent lies within a range from $10^{-7}$ to $10^{-5}$ moles/$m^2$ of alumina.

**2.** A composition according to Claim 1, the main crystalline phase of the alumina being of type y.

**3.** A composition according to Claims 1 or 2, the BET surface area of the alumina lying within a range from 80 to 250 $m^2/g$.

**4.** A composition according to any one of Claims 1 to 3, the average size of the particles of alumina being at most 200 nm.

**5.** A composition according to any one of Claims 1 to 4, the amount of coupling agent being equal to $10^{-6}$ moles/$m^2$ of alumina.

**6.** A composition according to any one of Claims 1 to 6, in which the alumina represents at least 50% of the reinforcing filler.

**7.** A composition according to Claim 6, in which the alumina represents the entire reinforcing filler.

**8.** A composition according to Claim 6, comprising, in addition to the alumina, highly dispersible silica as reinforcing filler.

**9.** A composition according to any one of Claims 1 to 8, **characterised in that** the diene elastomer(s) is/are selected from among natural rubber, homopolymers of conjugated dienes, copolymers of dienes which are conjugated together or with one or more vinyl aromatic compounds.

**10.** A composition according to Claim 9, **characterised in that** the diene elastomer is a butadiene-styrene copolymer or a blend of a butadiene-styrene copolymer and a polybutadiene having more than 90% cis-1,4 bonds.

**11.** A composition according to Claim 10, **characterised in that** the butadiene-styrene copolymer is prepared in solution and has a styrene content of between 20% and 40% by weight, a content of vinyl bonds of the butadiene part of between 55% and 65%, a content of trans-1,4 bonds of between 20% and 25% and a glass transition temperature of between -20°C and -30°C.

**12.** The use in a tyre of a composition according to any one of Claims 1 to 11.

**13.** The use according to Claim 12, **characterised in that** the composition is used in a tread, an underlayer for a tread, a crown reinforcement for a radial tyre, a tyre bead, a bead-wire filler rubber for a tyre bead, a sidewall rubber or a rim anchoring rubber.

**14.** The use according to Claim 13, **characterised in that** the composition is used in a tread.

**15.** A tread comprising a composition according to any one of Claims 1 to 11.

**16.** A tread for a tyre formed in its entirety of a composition according to any one of Claims 1 to 11.

**17.** A tyre comprising a composition according to any one of Claims 1 to 11.

**18.** A tyre comprising a tread according to Claims 15 or 16.